# EUROPÄISCHE PATENTSCHRIFT

(11) **EP 0 750 730 B1**
(45) Veröffentlichungstag und Bekanntmachung des Hinweises auf die Patenterteilung: **10.02.1999**
(21) Anmeldenummer: 95910441.5
(22) Anmeldetag: 03.03.1995
(51) Int. Cl.: F22B 1/00, F01K 23/10, F03G 6/00

(54) **Verfahren zur solaren Dampferzeugung**
Method of solar steam generation
Procédé de production de vapeur à l'aide de l'énergie solaire

(30) Priorität: 17.03.1994 DE 4409197
(43) Veröffentlichungstag der Anmeldung: 02.01.1997
(73) Patentinhaber: SIEMENS AKTIENGESELLSCHAFT, 80333 München (DE)
(72) Erfinder: KÖHLER, Wolfgang, D-90562 Kalchreuth (DE); KASTNER, Wolfgang, D-91074 Herzogenaurach (DE); KÜNSTLE, Konrad, D-91341 Röttenbach (DE)
(86) Internationale Anmeldenummer: DE9500284
(87) Internationale Veröffentlichungsnummer: WO9525247

(56) Entgegenhaltungen:
- EP-A- 0 106 688
- EP-A- 0 206 434
- WO-A-93/10406
- BE-A- 901 640
- US-A- 4 232 523

## Beschreibung

Die Erfindung betrifft ein Verfahren zur solaren Dampferzeugung, wobei mindestens eine Leitung von einem Wärmeenergie aufnehmenden Medium durchströmt und der Sonneneinstrahlung ausgesetzt wird.

Eine Anlage zur solaren Dampferzeugung ist aus der DE 41 26 038 A1 bekannt. Dabei wird ein Wärme aufnehmendes Medium über eine Leitung nacheinander durch zahlreiche Solarpanelen mit die Sonnenstrahlung konzentrierenden Rinnenkollektoren geleitet. Dort nimmt das Medium bedingt durch die Sonneneinstrahlung Wärmeenergie auf und wird verdampft.

Falls nur am Anfang der relativ langen Leitung das zu verdampfende Medium eingespeist würde, könnte sich eine unerwünschte Schwallströmung einstellen, die die Leitung mechanisch belasten kann. Daher wird bei der bekannten Ausführungsform an mehreren Stellen Medium in die Leitung eingespeist. Erst dadurch ist sichergestellt, daß Schwallströmung vermieden wird.

Trotzdem sind die Wärmeübergangsverhältnisse in der Leitung (Kühlung der Leitung), insbesondere in Strömungsrichtung am Beginn der Leitung, nicht immer zufriedenstellend. Das am Anfang der Leitung eingespeiste Wasser verdampft entsprechend der Wärmeeinbringung nur langsam, so daß nur ein kleiner, für die Kühlung nicht ausreichender Dampfstrom entsteht. Dieses Problem kann nicht hinreichend gelöst werden, indem man mehr Wasser in den Anfang der Leitung einspeist. Da eine schnelle Verdampfung einer großen Wassermenge nicht möglich ist, käme es dann zur bereits erwähnten Schwallströmung.

Außerdem ist aus dem Dokument EP-A-0 106 688 eine Dampfeinspeisung bekannt, bei der in Überhitzer-Paneele Dampf aus einer Trommel eingespeist wird. Ein Druckabfall ergibt sich hier bei der Einspeisung durch die Regelung des eingespeisten Massenstroms mittels Ventile. Desweiteren wird in der EP-A-0 206 438 eine Entspannung beschrieben, bei der die Wassereinspritzung zu einer Entspannung und Verdampfung führt.

Der Erfindung lag die Aufgabe zugrunde, ein Verfahren zur solaren Dampferzeugung anzugeben, mit dem stets und an jedem Ort der Leitung eine ausreichende Kühlung gewährleistet ist. Die Dampfmenge in der Leitung soll so groß sein, daß eine weitgehend gleichmäßige Strömung in der Leitung gewährleistet ist. Es soll nicht zu unregelmäßigen Strömungen, wie beispielsweise zu Schwallströmungen, kommen. Außerdem soll ein guter Wärmeübergang in das Medium gewährleistet sein.

Die Aufgabe wird gemäß der Erfindung dadurch gelöst, daß in die Leitung am Anfang als Medium Wasser oder Dampf und Wasser eingespeist wird, das unter einem Druck steht, der größer ist als der Druck, der in der Leitung herrscht, und das eine Enthalpie aufweist, die größer ist als die Enthalpie von gesättigtem Wasser in der Leitung, so daß beim Eintritt des Mediums in die Leitung eine unmittelbare Verdampfung zumindest eines Teils des eingespeisten Wassers erfolgt.

Damit wird der Vorteil erzielt, daß aufgrund der hohen Enthalpie des Mediums bereits am Anfang der Leitung eine relativ große Menge Dampf entsteht bzw. eingespeist wird, was bereits dort zu einem großen Dampfmassentrom führt. Bei einem großen Dampfmassenstrom ergibt sich vorteilhafterweise eine gute Kühlung. Es entsteht keine Schwallströmung. Folglich ist ein guter Wärmeübergang in das Medium gewährleistet und die Nachteile der Schwallströmung werden vermieden.

Das Medium, das eingespeist wird, kann Dampf oder Wasser oder eine Mischung aus Dampf und Wasser sein. Falls das Medium Dampf enthält, erzielt man sofort einen hohen Dampfmassenstrom. Bei Wasser, das unter einem hohen Druck steht, kommt es unmittelbar nach dem Einspeisen in die Leitung zu einem schnellen Verdampfen des Wassers (Explosionszerstaubung). Das ist darauf zurückzuführen, daß der Druck in der Leitung kleiner als der Dampfdruck des eingespeisten Wassers ist. Bedingt durch den schnellen Verdampfungsvorgang wird in kurzer Zeit eine große Dampfmenge bereitgestellt. Durch diese große Dampfmenge ist ein ausreichend großer Dampfmassenstrom gewährleistet.

Das Medium, das eingespeist wird, wird beispielsweise in einem Kraftwerk bereitgestelt. In einem als solchen bekannten Kraftwerk werden nämlich für den laufenden Betrieb unter hohem Druck stehendes Wasser und/oder Dampf erzeugt.

Beispielsweise wird das Medium, das eingespeist wird, in einem Kraftwerk in einem als solchen bekannten Wasser-Dampf-Trenngefäß und/oder als Anzapfdampf von einer Hochdruckturbine bereitgestellt.

Eine Vorrichtung zur Durchführung des erfindungsgemäßen Verfahrens kann Bestandteil eines Kraftwerkes sein. Dort werden beim üblichen Betrieb des Kraftwerkes unter hohem Druck stehende und eine große Enthalpie aufweisende Medien erzeugt. Bei einer Koppelung einer Anlage zur solaren Dampferzeugung mit einem Kraftwerk ist dann keine besondere Vorrichtung zum Erzeugen eines unter hohem Druck stehenden Mediums, das eine große Enthalpie hat, erforderlich, da diese Vorrichtung bereits im Kraftwerk vorhanden ist.

Falls ein Kreislauf des Kraftwerkes ein Wasser-Dampf-Trenngefäß und/oder eine Hochdruckturbine aufweist, können das Wasser-Dampf-Trenngefäß und/oder die Hochdruckturbine diejenige Vorrichtung sein, die das unter hohem Druck stehende und eine große Enthalpie aufweisende Medium bereitstellt, das über die Zuleitung in die Anlage zur solaren Dampferzeugung eingespeist werden soll.

Beispielsweise ist das Wasser-Dampf-Trenngefäß wasserseitig unmittelbar mit der Zuleitung verbunden. Dadurch wird unter relativ hohem Druck stehendes Wasser, das nahezu Sattigungstemperatur aufweist, in die Zuleitung eingespeist. Da in der Leitung der Anlage zur solaren Dampferzeugung, in die die Zuleitung einmündet, ein Druck herrscht, der unter dem Dampfdruck des eingespeisten Wassers liegt, kommt es in der Leitung zu einer schnellen Verdampfung des Wassers und zur Ausbildung eines Dampfstromes mit hohem Massenstrom. Damit ist ein guter Wämeübergang in der Anlage gewährleistet.

Ein hoher Dampfmassenstrom wird auch erzeugt, wenn unter hohem Druck stehender Dampf in die Leitung eingespeist wird. Dazu ist beispielsweise das Wasser-Dampf-Trenngefäß des Kraftwerkes dampfseitig unmittelbar mit der Zuleitung, die in die Leitung der Anlage einmündet, verbunden.

Nach einem anderen Beispiel ist eine Dampfableitung der Hochdruckturbine des Kraftwerkes unmittelbar mit der Zuleitung der Anlage verbunden. In beiden Fällen gelangt durch den hohen Druck des Dampfes eine genügend große Dampfmenge in die Leitung, wodurch eine ausreichende Kühlung sichergestellt ist.

Beispielsweise mündet in die Leitung der Anlage zwischen der am Anfang der Leitung einmündenden Zuleitung und der Ableitung mindestens eine Nachspeisezuleitung ein. Es reicht aus, wenn durch diese Nachspeisezuleitung ein Medium mit niedrigerer Enthalpie eingespeist wird als durch die Zuleitung. Diese Nachspeisung dient, wie beim Bekannten dazu, den Dampfmassenstrom in der Leitung zu erhöhen. Am Ende der Leitung steht damit ein großer Dampfmassenstrom zur Verfügung, mit dem mttels einer Turbine mechanische Energie gewonnen wird.

Die Nachspeiseleitung kann beispielsweise von einem Wasserbehälter ausgehen und eine Pumpe enthalten. Dieser Wasserbehälter kann Bestandteil eines Kraftwerkes sein.

Mit dem Verfahren und der Anlage nach der Erfindung wird insbesondere der Vorteil erzielt, daß das wärmeaufnehmende Medium in der der Sonneneinstrahlung ausgesetzten Anlage mit einem hohen Dampfmassenstrom und ohne Ausbildung unregelmäßiger Strömungen, wie Schwallströmungen, fließt. Dadurch wird ein guter Wärmeübergang erzielt.

Das Verfahren und die Anlage nach der Erfindung werden anhand der Zeichnung näher erläutert:
- FIG 1: zeigt eine Anlage zur solaren Dampferzeugung nach der Erfindung.
- FIG 2: zeigt eine nicht beanspruchte Variante einer derartigen Anlage.

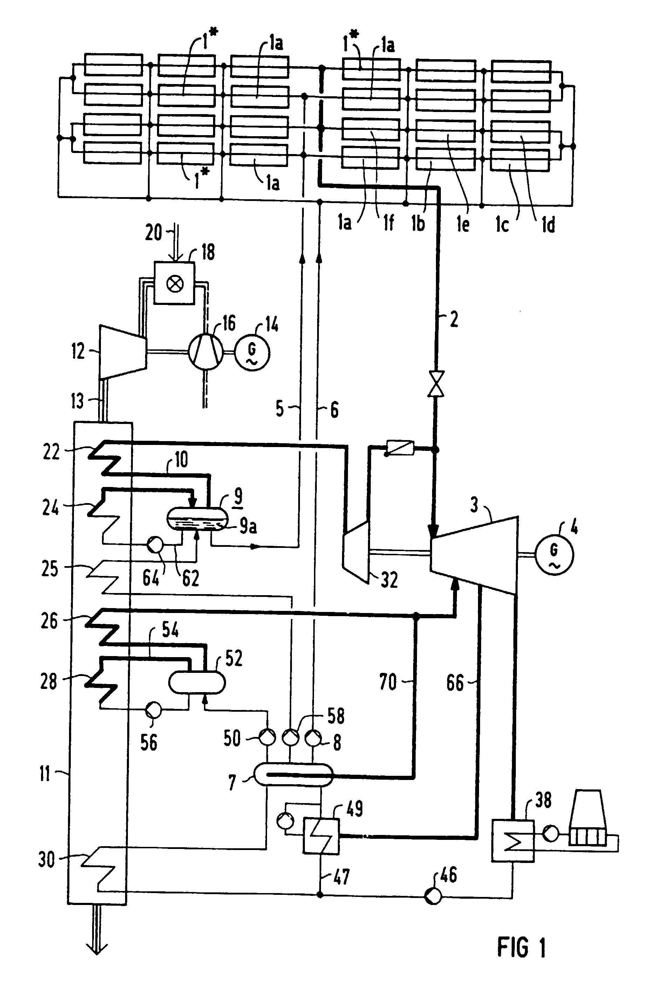

Figur 1 zeigt eine Anordnung mehrerer Sonnenkollektoren 1, die Leitungen 1* aufweisen. Diese Leitungen 1* werden von einem Medium durchströmt. In den Sonnenkollektoren 1 wird das Medium durch Strahlungs- und Wärmeenergie der Sonne erhitzt. Das erhitzte Medium wird über eine Ableitung 2 einer Turbine 3 zugeleitet, die mit einem Generator 4 zur Erzeugung elektrischer Energie verbunden ist. Im gezeigten Beispiel sind jeweils sechs Sonnenkollektoren 1a - 1f hintereinander geschaltet. Vier Gruppen mit jeweils sechs Sonnenkollektoren 1a - 1f werden parallel betrieben. Damit die gewünschte Mediumströmung durch die Anordnung der Sonnenkollektoren 1 möglich ist, reicht es nicht aus, wenn in eine Gruppe von sechs hintereinander geschalteten Sonnenkollektoren 1a - 1f das Medium nur in den in Strömungsrichtung ersten Sonnenkollektor la eingespeist wird. Vielmehr ist es notwendig, daß in Strömungsrichtung vor jedem der sechs Sonnenkollektoren 1a - 1f Medium nachgespeist wird. Das Einspeisen des Mediums in den jeweils ersten Sonnenkollektor la einer Gruppe erfolgt über die Zuleitung 5. Für alle Nachspeisungen vor den folgenden Sonnenkollektoren 1b - 1f ist eine Nachspeisezuleitung 6 vorhanden.

Bei der Erfindung kommt es darauf an, daß für das Einspeisen des Mediums in den ersten Sonnenkollektor 1a einer Gruppe aus hintereinander geschalteten Sonnenkollektoren 1a - 1f eine eigene Zuleitung 5 vorhanden ist, die von der Nachspeisezuleitung 6, die dann nur zum Nachspeisen von Medium in die folgenden Sonnenkollektoren 1b - 1f dient, getrennt ist. Die Nachspeisezuleitung 6 verbindet einen Wasserbehälter 7 über eine Pumpe 8 mit den Nachspeisestellen vor den auf die ersten folgenden Sonnenkollektoren 1b - 1f. Über die Zuleitung 5 ist mit dem Verfahren und der Anlage nach der Erfindung eine verbesserte Einspeisung von Medium gegeben, so daß ein ausreichender Dampfmassenstrom durch die Sonnenkollektoren 1 gewährleistet ist. Es kommt dabei darauf an, daß das in der Zuleitung 5 herantransportierte Medium beim Einspeisen in die ersten Sonnenkollektoren la unter einem Druck steht, der größer ist als der Druck, der in der Leitung 1* herrscht, die im ersten Sonnenkollektor la integriert ist. Außerdem soll die Enthalpie des über die Zuleitung 5 eingespeisten Mediums größer als die Enthalpie von gesättigtem Wasser in der Leitung 1* sein.

Das durch die Zuleitung 5 eingespeiste Medium ist unter hohem Druck stehendes Wasser, das nahezu Sattigungstemperatur aufweist. Beim Einspeisen von auf den Druck in der Leitung 1* bezogen überhitztem Wasser kommt es beim Eintritt in die Leitung 1* eines ersten Sonnenkollektors 1a zu einem explosionsartigen teilweisen Verdampfen des Wassers. Dadurch wird eine große Dampfmenge bereitgestellt, die in die Leitung 1* des Sonnenkollektors 1a strömt. Die große Dampfmenge und insbesondere die große Strömungsgeschwindigkeit des Dampfes gewährleisten vorteilhafterweise eine gute Kühlung der Leitungen 1* der hintereinander geschalteten Sonnenkollektoren 1. Durch das Nachspeisen von Medium vor jedem nachgeschalteten Sonnenkollektor 1b - 1f über die Nachspeisezuleitung 6 wird die Durchströmung stufenweise noch gesteigert. Nach Figur 1 wird das unter hohem Druck stehende Wasser durch ein Wasser-Dampf-Trenngefäß 9 bereitgestellt, von dessem Wasserraum 9a die Zuleitung 5 ausgeht. Das Wasser-Dampf-Trenngefäß 9 ist in Figur 1 Bestandteil eines Kreislaufes 10 eines Kraftwerkes, in den auch ein beheizter Wärmetauscher 11 und mindestens eine Turbine 3 eingebunden sind.

Im gezeigten Beispiel ist das Kraftwerk ein aus der DE 41 26 038 A1 bekanntes Gas- und Dampfturbinenkraftwerk. Der Warmetauscher 11 wird dabei durch Abgase einer Gasturbine 12 beheizt. Der Gasturbine 12 ist eine Brennkammer 18 vorgeschaltet, in die eine Brennstoffleitung 20 einmündet. Von der Gasturbine 12 wird ein Generator 14 und ein der Brennkammer 18 vorgeschalteter Luftverdichter 16 angetrieben. Die Abgase der Gasturbine 12 gelangen durch eine Abgasleitung 13 in den Wärmetauscher 11. Dort befinden sich in Strömungsrichtung des Abgases Hochdruck-Überhitzerheizflächen 22, Hochdruck-Verdampferheizflächen 24, Hochdruck-Vorwärmheizflächen 25, Niederdruck-Überhitzerheizflächen 26, Niederdruck-Verdampferheizflächen 28 und Speisewasser-Vorwärmheizflächen 30.

Im Kreislauf 10 ist der Turbine 3, die eine Niederdruck-Dampfturbine ist, eine Hochdruck-Dampfturbine 32 vorgeschaltet. Beide Turbinen treiben gemeinsam den Generator 4 an. Die Niederdruck-Dampfturbine 3 ist abdampfseitig an einen Kondensator 38 angeschlossen, der über eine Kondensatpumpe 46 und die Speisewasser-Vorwärmheizflächen 30 mit dem Wasserbehälter 7 für Speisewasser verbunden ist. Der Wasserbehälter 7 ist über eine Niederdruck-Speisewasserpumpe 50 mit einem Wasser-Dampf-Trenngefäß 52 eines Niederdruck-Verdampferkreislaufes 54 verbunden, der die Niederdruck-Verdampferheizflächen 28 und eine Umwälzpumpe 56 umfaßt. Dampfseitig sind an das Wasser-Dampf-Trenngefäß 52 des Niederdruck-Verdampferkreislaufes 54 die Niederdruck-Überhitzerheizflächen 26 angeschlossen, die in Serie zum Eingang der Niederdruck-Dampfturbine 3 geschaltet sind.

Der Wasserbehälter 7 ist als Bestandteil des Kreislaufes 10 über eine Hochdruck-Speisewasserpumpe 58 mit dem Wasser-Dampf-Trenngefäß 9 über die Hochdruck-Vorwärmheizflächen 25 verbunden. Das Wasser-Dampf-Trenngefäß 9 ist Teil des Hochdruck-Verdampferkreislaufes 62, der eine Umwälzpumpe 64 und die Hochdruck-Verdampferheizflächen 24 umfaßt. Dampfseitig ist das Wasser-Dampf-Trenngefäß 9 über die Hochdruck-Überhitzerheizflächen 22 mit der Hochdruck-Dampfturbine 32 verbunden, die in Serie zur Turbine 3, die eine Niederdruck-Dampftubine ist, geschaltet ist.

Eine von der Turbine 3 ausgehende Leitung 66 ist mit einem Wärmetauscher 49 verbunden, der primärseitig in einem parallel zu den Speisewasser-Vorwärmheizflächen 30 geschalteten Zweig 47 eingebunden ist. Die Primärseite und die Sekundärseite dieses Wärmetauschers 49 sind mit dem Wasserbehälter 7 verbunden. Außerdem kann eine Leitung 70 in den Wasserbehälter 7 einmünden, die von der Verbindungsleitung abzeigt, die die Niederdruck-Überhitzerheizflächen 26 mit der Turbine 3 verbindet.

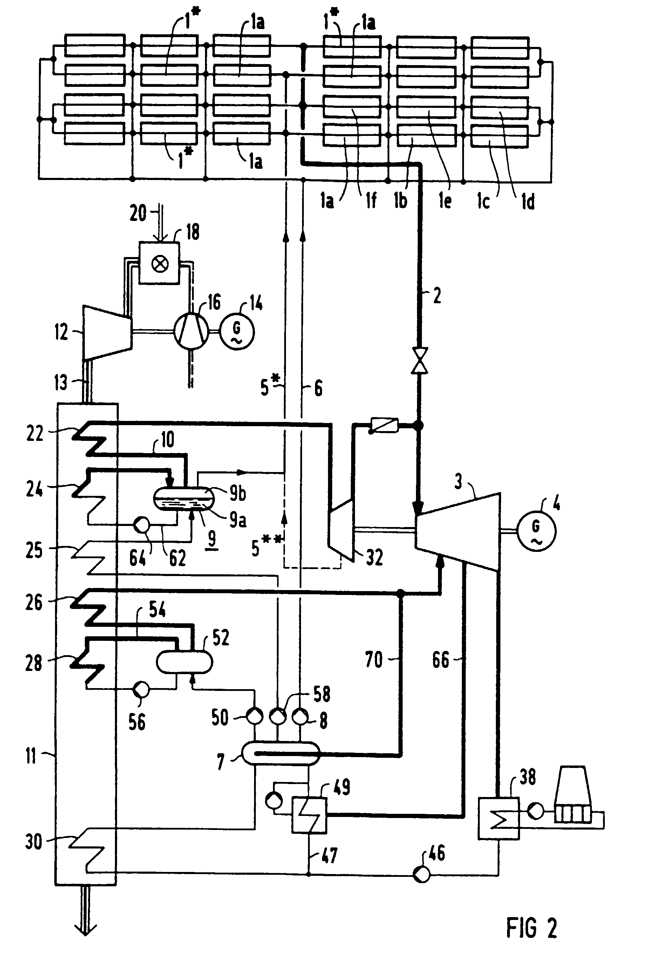

In Figur 2 ist eine Variante der Anlage nach Figur 1 gezeigt. Dabei sind gleiche Anlagenteile mit gleichen Bezugszeichen versehen. Der Unterschied der Anlage nach Figur 2 gegenüber der Anlage nach Figur 1 ist darin zu sehen, daß die Zuleitung 5* statt vom Wasserraum 9a vom Dampfraum 9b des Wasser-Dampf-Trenngefäßes 9 ausgeht.

Aus dem Dampfraum 9b wird gleich unter geeignet hohem Druck stehender Dampf, der eine geeignet große Enthalpie hat, in die Leitungen 1* der ersten Sonnenkollektoren 1a eingespeist. Es ist folglich dort keine Verdampfung nötig. Dadurch, daß der Dampf unter hohem Druck steht, gelangt jedoch eine genügend große Dampfmenge in die ersten Sonnenkollektoren 1a. Diese Dampfmenge sichert eine ausreichende Kühlung. Die Kühlung wird durch die Nachspeisung von Wasser in die nachgeschalteten Sonnenkollektoren 1b - 1f über die Nachspeisezuleitung 6 noch gesteigert. Die Zuleitung 5** für den unter hohem Druck stehenden Dampf mit großer Enthalpie kann statt vom Dampfraum 9b des Wasser-Dampf-Trenngefäßes 9 von der Hochdruck-Dampfturbine 32 ausgehen, die sich im Kreislauf 10 befindet. Der alternative Teil der Zuleitung 5** ist in Figur 2 gestrichelt gezeigt. Sowohl im Wasser-Dampf-Trenngefäß 9 als auch in der Hochdruck-Dampfturbine 32 wird Dampf mit geeignet hohem Druck bereitgestellt.

## Patentansprüche

1. Verfahren zur solaren Dampferzeugung, wobei mindestens eine Leitung (1*) von einem Wärmeenergie aufnehmenden Medium durchströmt und der Sonneneinstrahlung ausgesetzt wird, **dadurch gekennzeichnet**, daß in die Leitung (1*) am Anfang als Medium Wasser oder Dampf und Wasser eingespeist wird, das unter einem Druck steht, der größer ist als der Druck, der in der Leitung (1*) herrscht, und das eine Enthalpie aufweist, die größer ist als die Enthalpie von gesättigtem Wasser in der Leitung (1*), so daß beim Eintritt des Mediums in die Leitung (1*) eine unmittelbare Verdampfung zumindest eines Teils des eingespeisten Wassers erfolgt.

2. Verfahren nach Anspruch 1,
**dadurch gekennzeichnet**, daß das Medium, das eingespeist wird, in einem Kraftwerk bereitgestellt wird.

3. Verfahren nach Anspruch 2,
**dadurch gekennzeichnet,** daß das Medium, das eingespeist wird, in einem Wasser-Dampf-Trenngefäß (9) und/oder in einer Hochdruckturbine (32) des Kraftwerks bereitgestellt wird.

## Claims

1. Method for solar steam generation, at least one line (1*) being flowed through by a medium which absorbs thermal energy and being exposed to insolation, characterized in that there is fed at the start into the line (1*) water or steam and water as a medium which is at a pressure which is higher than the pressure which prevails in the line (1*) and which has an enthalpy which is larger than the enthalpy of saturated water in the line (1*), with the result that when the medium enters into the line (1*), at least some of the water fed in is immediately evaporated.

2. Method according to Claim 1, characterized in that the medium which is fed in is provided in a power station.

3. Method according to Claim 2, characterized in that the medium which is fed in is provided in a water/steam separator vessel (9) and/or in a highpressure turbine (32) of the power station.

## Revendications

1. Procédé de production de vapeur à l'aide de l'énergie solaire, dans lequel un fluide absorbant de l'énergie calorifique passe dans au moins un conduit (1*) qui est soumis au rayonnement solaire, caractérisé en ce qu'il est envoyé dans le conduit (1*) au début comme fluide de l'eau ou de la vapeur et de l'eau, qui est sous une pression supérieure à la pression qui règne dans le conduit (1*) et qui présente une enthalpie qui est plus grande que l'enthalpie de l'eau saturée dans le conduit (1*), de sorte que, lors de l'entrée du fluide dans le conduit (1*) il se produit une évaporation directe au moins d'une partie de l'eau qui y est envoyée.

2. Procédé suivant la revendication 1,
caractérisé en ce que le fluide qui est envoyé est mis à disposition dans une centrale électrique.

3. Procédé suivant la revendication 2,
caractérisé en ce que le fluide qui est envoyé est mis à disposition dans une enceinte (9) de séparation eau-vapeur et/ou dans une turbine (32) haute pression de la centrale électrique.
